# EUROPEAN PATENT APPLICATION

(11) **EP 3 611 681 A1**
(43) Date of publication of application: **19.02.2020**
(21) Application number: 19191999.2
(22) Date of filing: 15.08.2019
(51) Int. Cl.: G06Q 20/08, G06Q 20/10, G06Q 20/32, G06Q 20/38, G07F 19/00

(54) **SECURE MONEY TRANSFER AND CASH DELIVERY**

(30) Priority: 16.08.2018 US 201815998541; 15.02.2019 US 201916277578
(71) Applicant: Capital One Services, LLC, McLean, Virginia 22102 (US)
(72) Inventor: Kuzin, Taras, Vienna, VA Virginia 22182 (US); Trelogan, Ursula B., Reston, VA Virginia 20191 (US)
(74) Representative: Barker Brettell LLP

(57) **Abstract**

A money transfer from a sender to a recipient may result in a cash dispense from an ATM 110. At least one processor 302 may receive a request for cash to be dispensed by the ATM. The request may identify a recipient of the cash and a sender of the cash. The at least one processor may receive identity verification information for the recipient. The at least one processor may request authorization from a sender device associated with the sender. The requesting may include providing at least a portion of the identity verification information to the sender device. The at least one processor may receive the authorization from the sender device. The at least one processor may cause the cash to be dispensed by the ATM in response to receiving the authorization.

## Description

### BACKGROUND

Sometimes people urgently need cash. They may have insufficient funds in their own bank accounts and may therefore ask others (e.g., acquaintances) for cash. Acquaintances who are not nearby can send cash using money transfer services such as Western Union™ and/or MoneyGram™. These money transfer companies use agent locations from which a cash recipient can receive cash, typically from an employee at a cash register or the like.

### SUMMARY OF THE DISCLOSURE

In an example embodiment, a method of processing a money transfer and cash dispense may include receiving, by at least one processor, a request for cash to be dispensed by an ATM. The request may identify a recipient of the cash and a sender of the cash. The method may include receiving, by the at least one processor, identity verification information for the recipient. The method may include requesting, by the at least one processor, authorization from a sender device associated with the sender. The requesting may include providing at least a portion of the identity verification information to the sender device. The method may include receiving, by the at least one processor, the authorization from the sender device. The method may include causing, by the at least one processor, the cash to be dispensed by the ATM in response to receiving the authorization.

In some embodiments, receiving the request may include receiving data entered through a user interface of the ATM.

In some embodiments, receiving the identity verification information may include receiving biographical information through a user interface of the ATM.

In some embodiments, receiving the identity verification information may include receiving data captured by a sensor of the ATM. In some embodiments, the data captured by the sensor of the ATM may include audio information captured by an audio sensor of the ATM, video information captured by a video sensor of the ATM, image information captured by an image sensor of the ATM, data received by a transceiver of the ATM from a user device in communication with the ATM, or a combination thereof.

In some embodiments, the providing at least the portion of the identity verification information to the sender device may include causing the sender device to display biographical information of the receiver, display a message from the receiver, display an image and/or audio and/or video of the receiver captured at the ATM, or a combination thereof.

In some embodiments, the method may include requesting, by the at least one processor, confirmation from the receiver. The requesting may include sending a message to a receiver device associated with the receiver. The method may include receiving, by the at least one processor, the confirmation from the receiver through a user interface of the ATM. The causing the cash to be dispensed by the ATM may be in response both to receiving the authorization and receiving the confirmation.

In some embodiments, the method may include sending, by the at least one processor, a confirmation message to the sender device associated with the sender in response to the causing.

In another example embodiment, a server device may include at least one transceiver, a processor in communication with the at least one transceiver, and a non-transitory memory in communication with the processor. The memory may be configured to store instructions that, when executed by the processor, cause the processor to perform processing. The processing may include receiving a request for cash to be dispensed from an ATM by the at least one transceiver. The request may identify a recipient of the cash and a sender of the cash. The processing may include receiving identity verification information for the recipient by the at least one transceiver. The processing may include requesting authorization from a sender device associated with the sender. The requesting may include providing at least a portion of the identity verification information to the sender device by the at least one transceiver. The processing may include receiving the authorization from the sender device by the at least one transceiver. The processing may include evaluating the identify verification information to determine that the cash should be dispensed. The processing may include sending a command configured to cause the cash to be dispensed by the ATM by the at least one transceiver in response to receiving the authorization and determining that the cash should be dispensed.

In some embodiments, the evaluating may include determining whether biographical information included in the identity verification information corresponds to recipient account information stored in the memory.

In some embodiments, the portion of the identity verification information provided to the sender device may include data captured by a sensor of the ATM. In some embodiments, the data captured by the sensor of the ATM may include audio information captured by an audio sensor of the ATM, video information captured by a video sensor of the ATM, image information captured by an image sensor of the ATM, data received by a transceiver of the ATM from a user device in communication with the ATM, or a combination thereof.

In some embodiments, the processing may include requesting confirmation from the receiver. The requesting may include sending a message to a receiver device associated with the receiver by the at least one transceiver. The processing may include receiving the confirmation from the receiver from the ATM by the at least one transceiver. The sending of the command configured to cause the cash to be dispensed by the ATM may be in response both to receiving the authorization and receiving the confirmation.

In some embodiments, the processing may include sending a confirmation message to the sender device associated with the sender in response to the sending of the command.

In another example embodiment, an ATM may include at least one transceiver, a cash dispenser, a user interface, a processor in communication with the transceiver, the cash dispenser, and the user interface, and a non-transitory memory in communication with the processor. The memory may be configured to store instructions that, when executed by the processor, cause the processor to perform processing. The processing may include receiving a request for cash to be dispensed from the user interface. The request may identify a recipient of the cash and a sender of the cash. The processing may include receiving identity verification information for the recipient. The processing may include sending an authorization request to a server by the transceiver. The authorization request may identify the recipient of the cash and the sender of the cash and including the identity verification information. The processing may include receiving authorization from the server by the transceiver. The processing may include dispensing the cash by the cash dispenser in response to receiving the authorization.

In some embodiments, at least a portion of the identity verification information may be received from the user interface.

In some embodiments, the ATM may include at least one sensor, and at least a portion of the identity verification information may be received from the at least one sensor. In some embodiments, the at least one sensor may include an audio sensor, a video sensor, an image sensor, or a combination thereof.

In some embodiments, at least a portion of the identity verification information may be received from a user device by the at least one transceiver.

In some embodiments, the processing may include receiving a confirmation from the receiver from the user interface. The processing may include sending the confirmation to the server by the transceiver prior to receiving the authorization.

Features which are described in the context of separate aspects and/or embodiments of the invention may be used together and/or be interchangeable wherever possible. Similarly, where features are, for brevity, described in the context of a single embodiment, those features may also be provided separately or in any suitable sub-combination. Features described in connection with the server device, system and/or method may have corresponding features definable and/or combinable with respect to each other, and these embodiments are specifically envisaged.

### BRIEF DESCRIPTION OF THE FIGURES

FIG. 1 shows a network according to an embodiment of the present disclosure.
FIG. 2 shows a computer device according to an embodiment of the present disclosure.
FIG. 3 shows a server device according to an embodiment of the present disclosure.
FIG. 4 shows a secure money transfer process according to an embodiment of the present disclosure.
FIG. 5 shows a secure transfer backend process according to an embodiment of the present disclosure.
FIG. 6 shows a transfer request creation process according to an embodiment of the present disclosure.

### DETAILED DESCRIPTION OF SEVERAL EMBODIMENTS

Disclosed embodiments may allow users to request and receive cash from others using an ATM. For example, through an ATM user interface (UI), a recipient user may be able to identify another person as a cash sender and request a quantity of cash from the sender. The disclosed embodiments may perform identity verification of the recipient, which may include confirming the recipient's identity with the sender. The sender may be able to authorize the request, and the value of the cash may be withdrawn from the sender's account and dispensed to the recipient by the ATM. Accordingly, disclosed embodiments may facilitate remote cash transfers between users having bank accounts automatically and in a variety of locations at essentially any time (e.g., due to the availability and 24/7 accessibility of ATMs).

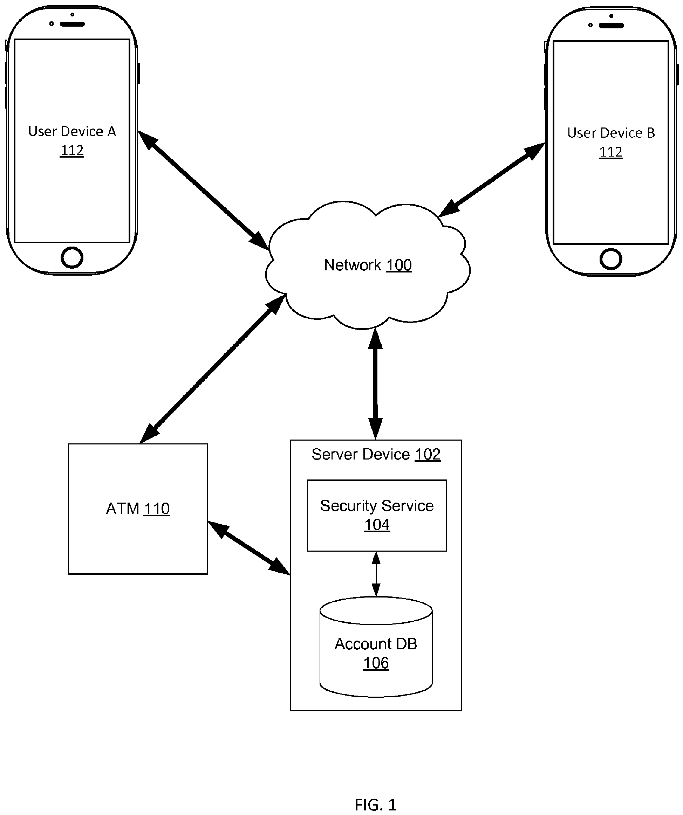

FIG. 1 shows a network 100 according to an embodiment of the present disclosure. Network 100 may include any public and/or private network, such as the Internet. User devices 112, ATM 110, and/or server device 102 may communicate with one another using network 100. In some embodiments, multiple user devices 112 for multiple users such as a sender and a recipient of funds, which may be users A and B for example, may be present on network 100. In some embodiments, ATM 110 and server device 102 may be configured to communicate with one another through one or more secure channels outside network 100 (e.g., a direct data connection or private network).

Server device 102 may be configured to facilitate communication between user devices 112 and/or between one or more user devices 112 and ATM 110. Server device 102 may also be configured to perform identity verification and/or other security-related tasks as described herein. For example, server device 102 may include security service 104, which may be configured to process requests for cash and/or cash transfer authorizations from user devices 112. Server device 102 may include account database 106, which may be configured to store account data that may be used to determine requesting user identities, for example. Server device 102 is depicted as a single server including a security service 104 and account database 106 for ease of illustration, but those of ordinary skill in the art will appreciate that server device 102 may be embodied in different forms for different implementations. For example, server device 102 may include a plurality of servers.

ATM 110 may be a device configured to provide automated banking services, such as deposits and/or cash withdrawals, to users having bank accounts and/or ATM/debit cards. ATM 110 may include a UI (e.g., including a display and/or keypad), card reader, camera and/or other sensors, wireless transceiver, and/or wired and/or network transceiver configured to communicate with server device 102 through network 100 and/or another connection. For example, ATM 110 may be configured to allow a user to access their bank account, create a request for cash from another user, and dispense cash in response to the request, as described below. While one ATM 110 is shown in FIG. 1 for ease of illustration, any number of ATMs 110, disposed in any locations, may be configured to communicate with server device 102 and/or perform the money transfer and/or cash delivery functions described herein. Also note that while a single network 100 is shown for ease of illustration, ATM 110 may also be configured to communicate with user device 112 through a separate connection (e.g., an ad hoc connection) through a separate wireless network (e.g., a Bluetooth™ connection established between ATM 110 and user device 112 when user device 112 is in proximity with ATM 110).

Each user device 112 may be one or more computing devices, such as portable devices like smartphones, tablets, laptops, smartwatches, etc. User devices 112 may be configured to provide UIs for accepting requests to transfer money and/or for providing identity information that may be used for verification purposes. In some embodiments, user device 112 may include a camera, a fingerprint reader, and/or other sensors configured to gather identity information. In some embodiments, user device 112 may include a display for showing the identity information to other users. Example processing that may be performed by one or more user devices 112 to perform a transfer of funds is described in detail below. Two user devices 112, one for a sender and one for a recipient, are depicted for ease of illustration, but those of ordinary skill in the art will appreciate that any number of user devices 112 configured to gather data, display data, and/or communicate with server device 102 may be present on network 100.

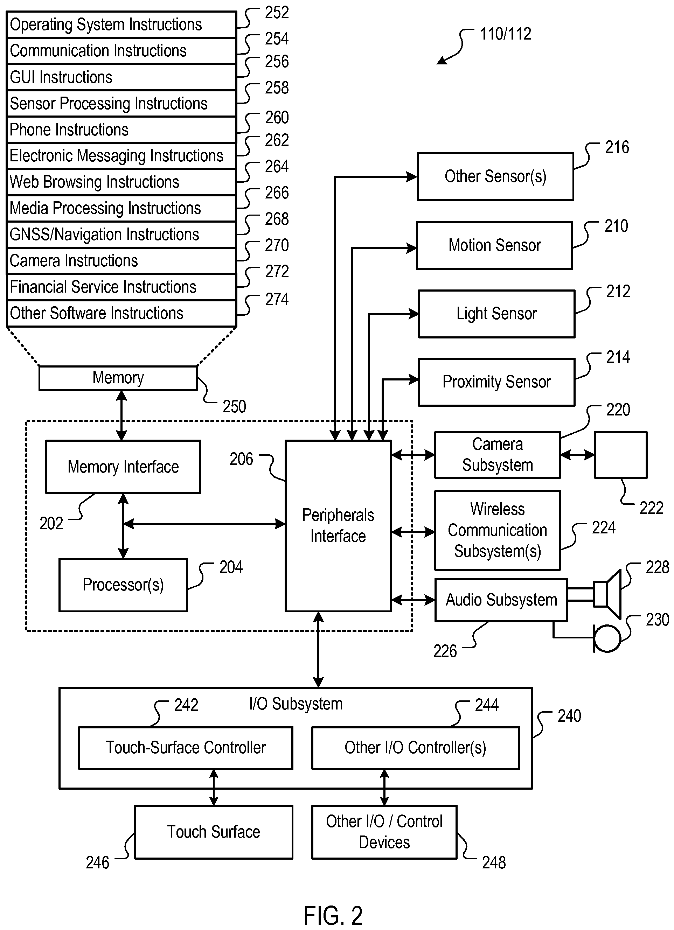

FIG. 2 shows a computer device according to an embodiment of the present disclosure. For example, the computer device may be a computer component of ATM 110 and/or may be one or more of user devices 112. User device 112 and/or ATM 110 may include a memory interface 202, one or more data processors, image processors, and/or central processing units 204, and a peripherals interface 206. The memory interface 202, the one or more processors 204, and/or the peripherals interface 206 may be separate components or may be integrated in one or more integrated circuits. The various components in user device 112 and/or ATM 110 may be coupled by one or more communication buses or signal lines.

Sensors, devices, and subsystems may be coupled to the peripherals interface 206 to facilitate multiple functionalities. For example, a motion sensor 210, a light sensor 212, and a proximity sensor 214 may be coupled to the peripherals interface 206 to facilitate orientation, lighting, and proximity functions. Other sensors 216 may also be connected to the peripherals interface 206, such as a global navigation satellite system (GNSS) (e.g., GPS receiver), a temperature sensor, a biometric sensor, magnetometer, or other sensing device, to facilitate related functionalities.

A camera subsystem 220 and an optical sensor 222, e.g., a charged coupled device (CCD) or a complementary metal-oxide semiconductor (CMOS) optical sensor, may be utilized to facilitate camera functions, such as recording photographs and video clips. The camera subsystem 220 and the optical sensor 222 may be used to collect images of a user to be used during authentication of a user, e.g., by performing facial recognition analysis.

Communication functions may be facilitated through one or more wireless communication subsystems 224, which can include radio frequency receivers and transmitters and/or optical (e.g., infrared) receivers and transmitters. For example, the BTLE and/or WiFi communications described above may be handled by wireless communication subsystems 224. The specific design and implementation of the communication subsystems 224 may depend on the communication network(s) over which user device 112 is intended to operate. For example, user device 112 may include communication subsystems 224 designed to operate over a GSM network, a GPRS network, an EDGE network, a WiFi or WiMax network, and a Bluetooth™ network. For example, the wireless communication subsystems 224 may include hosting protocols such that user device 112 can be configured as a base station for other wireless devices and/or to provide a WiFi service.

An audio subsystem 226 may be coupled to a speaker 228 and a microphone 530 to facilitate voice-enabled functions, such as speaker recognition, voice replication, digital recording, and telephony functions. The audio subsystem 226 may be configured to facilitate processing voice commands, voiceprinting, and voice authentication, for example.

The I/O subsystem 240 may include a touch-surface controller 242 and/or other I/O controller(s) 244. The touch-surface controller 242 may be coupled to a touch surface 246. The touch surface 246 and touch-surface controller 242 may, for example, detect contact and movement or break thereof using any of a plurality of touch sensitivity technologies, including but not limited to capacitive, resistive, infrared, and surface acoustic wave technologies, as well as other proximity sensor arrays or other elements for determining one or more points of contact with the touch surface 246.

The other I/O controller(s) 244 may be coupled to other I/O/control devices 248, such as one or more buttons, rocker switches, thumb-wheel, infrared port, USB port, and/or a pointer device such as a stylus. The one or more buttons (not shown) may include an up/down button for volume control of the speaker 228 and/or the microphone 230. In some embodiments, such as when the computer device is an ATM 110, the I/O controller(s) 244 may control ATM-specific I/O devices 248 such as cash dispensers, check/document receivers/scanners, keypads, card readers, etc.

In some implementations, such as when the computer device is a user device 112, a pressing of the button for a first duration may disengage a lock of the touch surface 246; and a pressing of the button for a second duration that is longer than the first duration may turn power to user device 112 on or off. Pressing the button for a third duration may activate a voice control, or voice command, module that enables the user to speak commands into the microphone 230 to cause the device to execute the spoken command. The user may customize a functionality of one or more of the buttons. The touch surface 246 can, for example, also be used to implement virtual or soft buttons and/or a keyboard.

In some implementations, user device 112 and/or ATM 110 may present recorded audio and/or video files, such as MP3, AAC, and MPEG files. In some implementations, user device 112 may include the functionality of an MP3 player, such as an iPod™. User device 112 may, therefore, include a 36-pin connector and/or 8-pin connector that is compatible with the iPod. Other input/output and control devices may also be used.

The memory interface 202 may be coupled to memory 250. The memory 250 may include high-speed random access memory and/or non-volatile memory, such as one or more magnetic disk storage devices, one or more optical storage devices, and/or flash memory (e.g., NAND, NOR). The memory 250 may store an operating system 252, such as Darwin, RTXC, LINUX, UNIX, OS X, WINDOWS, or an embedded operating system such as VxWorks.

The operating system 252 may include instructions for handling basic system services and for performing hardware dependent tasks. In some implementations, the operating system 252 may be a kernel (e.g., UNIX kernel). In some implementations, the operating system 252 may include instructions for performing voice authentication.

The memory 250 may store communication instructions 254 to facilitate communicating with one or more additional devices, one or more computers and/or one or more servers. The memory 250 may include graphical user interface instructions 256 to facilitate graphic user interface processing; sensor processing instructions 258 to facilitate sensor-related processing and functions; phone instructions 260 to facilitate phone-related processes and functions; electronic messaging instructions 262 to facilitate electronic-messaging related processes and functions; web browsing instructions 264 to facilitate web browsing-related processes and functions; media processing instructions 266 to facilitate media processing-related processes and functions; GNSS/Navigation instructions 268 to facilitate GNSS and navigation-related processes and instructions; and/or camera instructions 270 to facilitate camera-related processes and functions.

The memory 250 may store financial instructions 272 to facilitate other processes and functions described herein. For example, when the computer device is an ATM 110, financial instructions 272 may include software for providing ATM features and functions. When the computer device is a user device 112, financial instructions 272 may include financial and/or banking app instructions/

The memory 250 may also store other software instructions 274, such as web video instructions to facilitate web video-related processes and functions; and/or web shopping instructions to facilitate web shopping-related processes and functions. In some implementations, the media processing instructions 266 may be divided into audio processing instructions and video processing instructions to facilitate audio processing-related processes and functions and video processing-related processes and functions, respectively.

Each of the above identified instructions and applications may correspond to a set of instructions for performing one or more functions described herein. These instructions need not be implemented as separate software programs, procedures, or modules. The memory 250 may include additional instructions or fewer instructions. Furthermore, various functions of user device 112 may be implemented in hardware and/or in software, including in one or more signal processing and/or application specific integrated circuits.

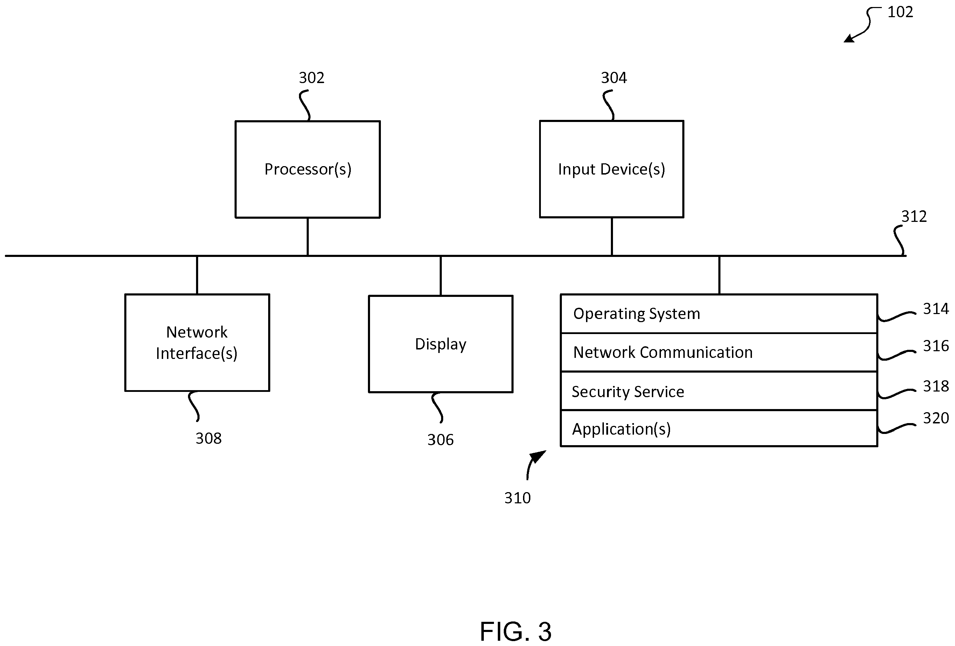

FIG. 3 shows a server device 102 according to an embodiment of the present disclosure. Server device 102 may be implemented on any electronic device that runs software applications derived from compiled instructions, including without limitation personal computers, servers, smart phones, media players, electronic tablets, game consoles, email devices, etc. In some implementations, server device 102 may include one or more processors 302, one or more input devices 304, one or more display devices 306, one or more network interfaces 308, and one or more computer-readable mediums 310. Each of these components may be coupled by bus 312.

Display device 306 may be any known display technology, including but not limited to display devices using Liquid Crystal Display (LCD) or Light Emitting Diode (LED) technology. Processor(s) 302 may use any known processor technology, including but not limited to graphics processors and multi-core processors. Input device 304 may be any known input device technology, including but not limited to a keyboard (including a virtual keyboard), mouse, track ball, and touch-sensitive pad or display. Bus 312 may be any known internal or external bus technology, including but not limited to ISA, EISA, PCI, PCI Express, NuBus, USB, Serial ATA or FireWire. Computer-readable medium 310 may be any medium that participates in providing instructions to processor(s) 302 for execution, including without limitation, non-volatile storage media (e.g., optical disks, magnetic disks, flash drives, etc.), or volatile media (e.g., SDRAM, ROM, etc.).

Computer-readable medium 310 may include various instructions 314 for implementing an operating system (e.g., Mac OS®, Windows®, Linux). The operating system may be multiuser, multiprocessing, multitasking, multithreading, real-time, and the like. The operating system may perform basic tasks, including but not limited to: recognizing input from input device 304; sending output to display device 306; keeping track of files and directories on computer-readable medium 310; controlling peripheral devices (e.g., disk drives, printers, etc.) which can be controlled directly or through an I/O controller; and managing traffic on bus 312. Network communications instructions 316 may establish and maintain network connections (e.g., software for implementing communication protocols, such as TCP/IP, HTTP, Ethernet, telephony, etc.).

Security service instructions 318 may include instructions that verify user identities, provide user notifications, and/or facilitate communication between devices (e.g., ATM 110 and/or user devices 112) as described herein. Application(s) 320 may be an application that uses or implements the processes described herein and/or other processes. The processes may also be implemented in operating system 314.

The described features may be implemented in one or more computer programs that may be executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program may be written in any form of programming language (e.g., Objective-C, Java), including compiled or interpreted languages, and it may be deployed in any form, including as a stand-alone program or as a module, component, subroutine, or other unit suitable for use in a computing environment.

Suitable processors for the execution of a program of instructions may include, by way of example, both general and special purpose microprocessors, and the sole processor or one of multiple processors or cores, of any kind of computer. Generally, a processor may receive instructions and data from a read-only memory or a random access memory or both. The essential elements of a computer may include a processor for executing instructions and one or more memories for storing instructions and data. Generally, a computer may also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data may include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

To provide for interaction with a user, the features may be implemented on a computer having a display device such as a Light Emitting Diode (LED) or LCD (liquid crystal display) monitor for displaying information to the user and a keyboard and a pointing device such as a mouse or a trackball by which the user can provide input to the computer.

The features may be implemented in a computer system that includes a back-end component, such as a data server, or that includes a middleware component, such as an application server or an Internet server, or that includes a front-end component, such as a client computer having a graphical user interface or an Internet browser, or any combination thereof. The components of the system may be connected by any form or medium of digital data communication such as a communication network. Examples of communication networks include, e.g., a telephone network, a LAN, a WAN, and the computers and networks forming the Internet.

The computer system may include clients and servers. A client and server may generally be remote from each other and may typically interact through a network. The relationship of client and server may arise by virtue of computer programs running on the respective computers and having a client-server relationship to each other.

One or more features or steps of the disclosed embodiments may be implemented using an API. An API may define one or more parameters that are passed between a calling application and other software code (e.g., an operating system, library routine, function) that provides a service, that provides data, or that performs an operation or a computation.

The API may be implemented as one or more calls in program code that send or receive one or more parameters through a parameter list or other structure based on a call convention defined in an API specification document. A parameter may be a constant, a key, a data structure, an object, an object class, a variable, a data type, a pointer, an array, a list, or another call. API calls and parameters may be implemented in any programming language. The programming language may define the vocabulary and calling convention that a programmer will employ to access functions supporting the API.

In some implementations, an API call may report to an application the capabilities of a device running the application, such as input capability, output capability, processing capability, power capability, communications capability, etc.

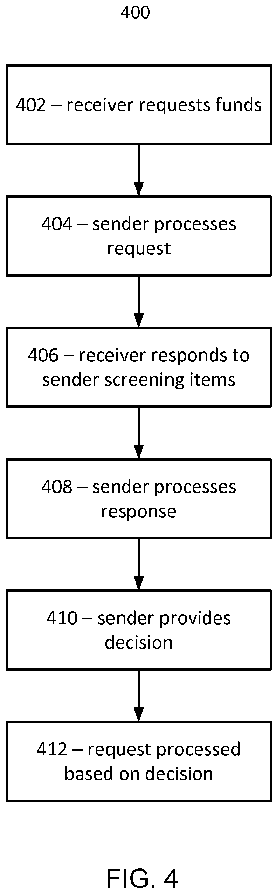

FIG. 4 shows a secure money transfer process 400 according to an embodiment of the present disclosure. Various elements of network 100, such as one or more user devices 112, ATM 110, and/or server device 102, may work together to perform process 400 in some embodiments. Process 400 may facilitate transfer of cash from a sender to a receiver through ATM 110.

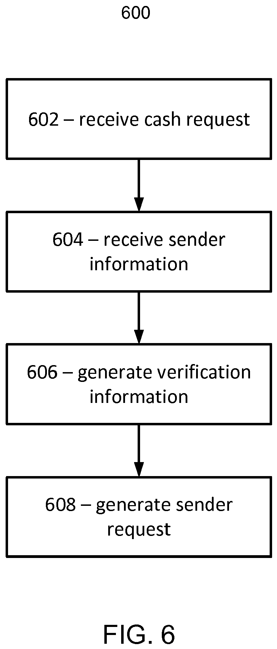

At 402, ATM 110 and/or user device A 112 may generate a request for funds on behalf of the receiver. For example, a user may access their account through ATM 110 (e.g., through a combination of reading an ATM/debit card and entering a code into the UI of ATM 110). ATM 110 UI may provide an option to request cash from a sender. In some embodiments, user device A 112 may have a banking app installed. User device A 112 and ATM 110 may communicate with one another through network 100 and/or by a local connection such as a Bluetooth™ or Bluetooth™ low energy link to establish that user device A 112 and ATM 110 are in proximity to one another. In this case, the banking app may provide an option to request cash from the sender and have the cash delivered to ATM 110 that is in proximity to user device A 112. Specific examples of data that may be added to the request, such as an amount of money requested and/or identity verification information for the receiver, are described below with respect to FIG. 6. ATM 110 and/or user device A 112 may send the request to server device 102.

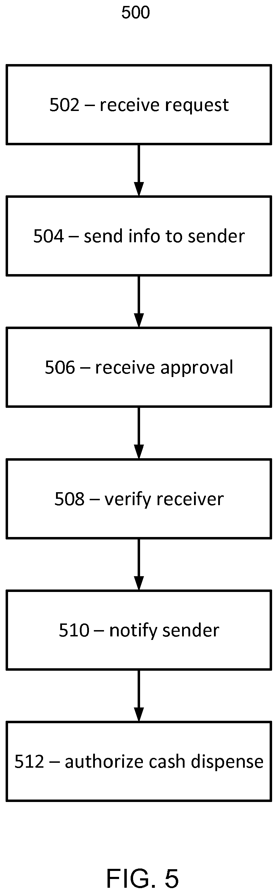

At 404, user device B 112 may receive information describing the request from server device 102 and may respond to the information. For example, security service 104 may send data through network 100 to user device B 112 including at least the amount and a portion of the identifying information from the receiver. In some embodiments, user device B 112 may have a banking app installed, and the banking app may present a UI indicating the amount requested and/or information about the receiver. The sender may accept or refuse the request and, in some embodiments, may also provide information of their own (e.g., requests for screening information). Specific examples of data that may be added to the response are described below with respect to FIG. 5. User device B 112 may send the response to server device 102.

At 406, ATM 110 and/or user device A 112 may respond to sender requests for screening information if applicable. For example, ATM 110 and/or user device A 112 may receive information identifying sender requests for more information (e.g., to verify the receiver's identity) from server device 102. ATM 110 and/or user device A 112 may display the information through their respective UIs. In this case, ATM 110 and/or user device A 112 may receive sender responses to the requests through the UIs and may transmit the responses to server device 102. Specific examples of data that may be added to the response are described below with respect to FIG. 5.

At 408, user device B 112 may receive information describing the response to the screening information from server device 102 and may respond to the information. For example, the sender may accept or refuse the request through the UI on the basis of the additional screening information.

At 410, server device 102 may receive the decision from the sender (e.g., from user device B 112 through network 100). This may occur after 404 or after 408 if additional screening information is required. For example, the decision may indicate that the transfer is authorized or that the transfer is refused.

At 412, server device 102 may process the transaction if the transaction is authorized. For example, security service 104 may move funds from a bank account of the sender to a bank account of the receiver and withdraw the funds from the receiver's bank account as the cash withdrawal. In another example, security service 104 may withdraw the funds from the sender's bank account as the cash withdrawal without performing and/or recording the transfer between bank accounts. The transfer and/or withdrawal may be performed by security service 104 directly and/or by security service 104 communicating with a separate banking server (not shown) through network 100 or another connection, for example. In any case, security service 104 may authorize ATM 110 to provide the cash to the receiver, and ATM 110 may dispense the cash.

FIGS. 5 and 6 provide additional details about the process 400 of FIG. 4. For example, FIG. 5 provides details about how server device 102 may perform backend processing, and FIG. 6 provides details about how a request for funds may be generated.

FIG. 5 shows a secure transfer backend process 500 according to an embodiment of the present disclosure. Server device 102 may perform process 500 to verify user identities and/or authorize cash dispenses, thereby providing security to ensure that a requester is who they claim to be before allowing them to receive cash.

At 502, server device 102 may receive a request from ATM 110 and/or user device A 112 for a cash transfer. For an example of how ATM 110 and/or user device A 112 may generate the request, see process 600 of FIG. 6. In some embodiments, the request may include at least information identifying the sender who is to send the money (e.g., a name, phone number, and/or email address of the sender), information identifying the recipient (e.g., including identity verification information as described below), and an amount of money to send.

At 504, server device 102 may send information about the request to user device B 112 (e.g., the sender's device). For example, security service 104 may lookup a sender's identity in account database 106 based on the identifying information of the sender provided at 502. Security service 104 may generate request information for sending to user device B 112. The request information may include information identifying the receiver provided in the request received at 502 and/or retrieved from account database 106 based on identifying information included in the request received at 502. The request information may include an indication of the amount of money requested.

The request information may also include data configured to cause user device B 112 to solicit feedback from the sender through a UI provided by user device B 112. For example, in response to receiving the request information, user device B 112 may present a UI prompting the sender to enter information that may include, but is not limited to, the following: approval or denial of funding request, account from which to debit funds if approved, request to present screening items to receiver, selection or creation of screening items if requested, and/or a message to the receiver.

At 506, server device 102 may receive a response from user device B 112. If the response indicates that the sender has refused the transaction, security service 104 may send a message to the receiver (e.g., to ATM 110 and/or user device A 112 through network 100) indicating the transaction is refused, and process 500 may end. In some embodiments, if a message to the receiver was included in the response from user device B 112, security service 104 may include the message in the transaction refusal message.

If the response from user device B 112 included an authorization to proceed with the transaction, at 508, server device 102 may perform additional processing to verify the identity of the receiver. The additional processing may include, but is not limited to, one or more of the following actions:

Security service 104 may send a one-time use code to user device A 112 (e.g., through an SMS message, email, and/or through the banking app), and the receiver may be required to enter the one-time use code into the ATM 110 UI in order to proceed. ATM 110 may send a message to server device 102 when the receiver enters the one-time use code into the ATM 110 UI, thereby indicating that the receiver associated with the personal identifier used (e.g., phone number for SMS message, email address for email, account number for banking app) is actually at the expected ATM 110 through which the request was entered at 502.

Security service 104 may send a command to ATM 110 causing a camera integrated into ATM 110 to take a picture of the person at ATM 110. Security service 104 may analyze this picture (e.g., comparing it with data in account database 106 to determine whether it is the expected receiver) and/or may send the picture to user device B 112 and receive confirmation from the sender via user device B 112 that the picture is a picture of the receiver.

Security service 104 may send a command to ATM 110 causing a camera and/or microphone integrated into ATM 110 to initiate a video chat between ATM 110 and sender's user device B 112. Security service 104 may receive confirmation from the sender via user device B 112 that the chatter in the video is the receiver.

For requests sent through ATM 110, security service 104 may send a message to user device A 112 using one or more addresses for the receiver that may be stored in account database 106. For example, the ATM 110 user may claim to be a particular individual, but security service 104 may look up that individual in account database 106 and send a message to an address on file for the individual (e.g., phone number SMS, email, etc.). The user may respond to the message using user device A 112, and security service 104 may verify that the message came from the expected address.

As noted above, the sender may have sent a screening question or other request for screening information in response to receiving the transaction request. Security service 104 may cause ATM 110 and/or user device A 112 to display the question using its respective UI and receive a response to the question. Security service 104 may receive the response through network 100. Security service 104 may analyze the response to determine whether it matches the correct response provided by the sender and/or may send the response to user device B 112 and receive confirmation that the response is correct from user device B 112 (e.g., by affirmation entered through the UI by the sender).

Security service 104 may cause ATM 110 and/or user device A 112 to require the receiver to enter his/her SSN, government ID number, and/or answer(s) to account access question(s) (e.g., when did you borrow from Capital One™?, what address did you live at 5 years ago?) using its respective UI and receive a response. Security service 104 may receive the response through network 100. Security service 104 may analyze the response to determine whether it matches a known SSN or government ID number for the receiver stored in account database 106.

Security service 104 may cause ATM 110 and/or user device A 112 to use a built-in camera to run an iris scan on the receiver. Security service 104 may receive the scan through network 100. Security service 104 may analyze the scan to determine whether it matches a known iris scan for the receiver stored in account database 106.

Security service 104 may cause ATM 110 and/or user device A 112 to use a built-in camera or fingerprint scanner to run a fingerprint scan on the receiver. Security service 104 may receive the scan through network 100. Security service 104 may analyze the scan to determine whether it matches a known fingerprint scan for the receiver stored in account database 106.

Security service 104 may cause ATM 110 and/or user device A 112 to use a built-in camera to run a scan on the receiver's government ID. Security service 104 may receive the scan through network 100. Security service 104 may analyze the scan to determine whether it matches a known government ID for the receiver stored in account database 106.

Security service 104 may cause user device A 112 to use a built-in geolocation transceiver (e.g., global positioning system (GPS) to locate user device A 112. Security service 104 may receive the location through network 100. Security service 104 may analyze the location to determine whether it is near the ATM 110 from which the request was received at 502 and/or may send the location to user device B 112 and receive confirmation that the location is a plausible location for the receiver from user device B 112 (e.g., by affirmation entered through the UI by the sender).

Security service 104 may cause user device A 112 to locate a stored public key or distributed ledger ID for a blockchain or other distributed service in the memory of user device A 112. User device A 112 may send the key or ID to security service 104 through network 100. Security service 104 may analyze the key or ID to determine whether it matches a known key or ID for the receiver stored in account database 106.

ATM 110 may communicate with user device A 112 through a local connection, such as a Bluetooth™ connection or the like. Meanwhile, the user may be logged into a personal account on a banking app on user device A 112. ATM 110 may receive information from user device A 112 through the local connection providing the identity of the user logged into the banking app, and ATM 110 may send this information to security service 104.

In some embodiments, some or all of the authorization processing described above may be performed at the time of receiving the request at 502 (e.g., the request may include some identity verification information (e.g., video/images etc.) that may be processed by security service 104).

If verification at 508 is successful, at 510, server device 102 may notify the sender that the transaction is in progress. For example, security service 104 may send a message to user device B 112 over network 100 (e.g., SMS, email, or in-app message) indicating that the money transfer/withdrawal is in process. Server device 102 may not require a confirmation from user device B 112, as the transaction may already be in progress. However, the message sent at 510 may provide an extra layer of security, as it may give the sender a chance to learn of the transaction if they were not aware (e.g., through covert malicious use or spoofing of user device B 112) and contact the bank managing server device 102 to reverse, halt, or credit the transaction.

At 512, server device 102 may authorize the cash dispense. For example, security service 104 may send a message to ATM 110 causing ATM 110 to dispense the cash authorized by the sender. In some embodiments, security service 104 may send a message to user device A 112 and/or user device B 112 over network 100 (e.g., SMS, email, or in-app message) indicating that the money transfer/withdrawal is complete.

FIG. 6 shows a transfer request creation process 600 according to an embodiment of the present disclosure. ATM 110 and/or user device 112 may perform process 600 to generate a request for funds (e.g., at 402 of process 400).

At 602, ATM 110 and/or user device A 112 may receive user (receiver) input requesting cash from another bank account holder (sender). For example, a user may access their account through ATM 110 (e.g., through a combination of reading an ATM/debit card and entering a code into the UI of ATM 110). ATM 110 UI may provide an option to request cash from a sender. For example, on the screen of the ATM, there may be an option to "request cash from someone you know" or a similar prompt, which the user may select. In some embodiments, user device A 112 may have a banking app installed. User device A 112 and ATM 110 may communicate with one another through network 100 and/or by a local connection such as a Bluetooth™ or Bluetooth™ low energy link to establish that user device A 112 and ATM 110 are in proximity to one another. In this case, the banking app may provide an option to request cash from the sender and have the cash delivered to ATM 110 that is in proximity to user device A 112. The receiver may select the option to request cash through the ATM 110 UI or the user device A 112 UI.

Upon selecting the option to request cash from a sender, ATM 110 and/or user device A 112 may prompt the receiver for additional information. For example, ATM 110 and/or user device A 112 may prompt the receiver for their own identifying information, such as a cell phone number and/or an email address. ATM 110 and/or user device A 112 may prompt the receiver for identifying information of the sender, such as a cell phone number and/or an email address. ATM 110 and/or user device A 112 may prompt the receiver for an amount of cash requested. ATM 110 and/or user device A 112 may receive answers to the prompts and send the answers to server device 102, which may identify the sender (e.g., see step 504 of process 500).

At 604, ATM 110 and/or user device A 112 may receive sender information from server device 102 and display the sender information. For example, server device 102 may look up a sender's identity based on the identifying information of the sender provided at 602 and may provide additional information about the sender (e.g., a name, a photo, etc.). ATM 110 and/or user device A 112 may display the received information so that the receiver may verify that the requested sender is the intended sender. In some embodiments, the receiver may confirm that the receiver is correct through the ATM 110 UI or the user device A 112 UI.

At 606, ATM 110 and/or user device A 112 may generate identity verification information for the receiver. For example, ATM 110 and/or user device A 112 may collect the identity verification information through the UI, one or more sensors available on ATM 110 and/or user device A 112, and/or a combination thereof.

Example data that may be collected through the UI may include, but is not limited to, the following biographical information: email and/or mobile number of the receiver, social security number (SSN) of the receiver, government ID (e.g., driver's license or passport number) of the receiver, a distributed ledger ID (e.g., public blockchain key) of the receiver, answers to account verification questions provided by the receiver upon setup of an account, a text message from the receiver to the sender, and/or answers to sender screening questions if provided (e.g., as described above).

In some embodiments, ATM 110 and/or user device A 112 may include one or more sensors, as described above. For example, sensors may include audio sensors, video sensors, image sensors, transceivers, geolocation sensors, and/or others. Example data that may be collected through the sensors may include, but is not limited to, the following: video of the receiver, a photo of the receiver, a fingerprint of the receiver, an iris scan of the receiver, a facial recognition scan of the receiver, geolocation data gathered by user device A 112 (e.g., to validate that user device A 112 is near ATM 110), and/or communication data received by ATM 110 from user device A 112.

At 608, ATM 110 and/or user device A 112 may generate a request for cash from the sender to the receiver. For example, ATM 110 and/or user device A 112 may include some or all of the amount requested, the identity verification information, and/or the sender information in the request. ATM 110 and/or user device A 112 may send the request to server device 102 (e.g., see step 502 of process 500).

While various embodiments have been described above, it should be understood that they have been presented by way of example and not limitation. It will be apparent to persons skilled in the relevant art(s) that various changes in form and detail can be made therein without departing from the spirit and scope. In fact, after reading the above description, it will be apparent to one skilled in the relevant art(s) how to implement alternative embodiments. For example, other steps may be provided, or steps may be eliminated, from the described flows, and other components may be added to, or removed from, the described systems. Accordingly, other implementations are within the scope of the following claims.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom. Features of the devices, systems and/or methods described may be incorporated into or used in connection with each other.

In addition, it should be understood that any figures which highlight the functionality and advantages are presented for example purposes only. The disclosed methodology and system are each sufficiently flexible and configurable such that they may be utilized in ways other than that shown.

Although the term "at least one" may often be used in the specification, claims and drawings, the terms "a", "an", "the", "said", etc. also signify "at least one" or "the at least one" in the specification, claims and drawings.

Finally, it is the applicant's intent that only claims that include the express language "means for" or "step for" be interpreted under 35 U.S.C. 112(f). Claims that do not expressly include the phrase "means for" or "step for" are not to be interpreted under 35 U.S.C. 112(f).

The term "comprising" does not exclude other elements or steps,

Any reference signs in the claims shall not be construed as limiting the scope of the claims.

## Claims

1. A method of processing a money transfer and cash dispense comprising:
receiving, by at least one processor, a request for cash to be dispensed by an ATM, the request identifying a recipient of the cash and a sender of the cash;
receiving, by the at least one processor, identity verification information for the recipient;
requesting, by the at least one processor, authorization from a sender device associated with the sender, the requesting including providing at least a portion of the identity verification information to the sender device;
receiving, by the at least one processor, the authorization from the sender device; and
causing, by the at least one processor, the cash to be dispensed by the ATM in response to receiving the authorization.

2. The method of claim 1, wherein receiving the request comprises receiving data entered through a user interface of the ATM.

3. The method of claim 1 or claim 2, wherein receiving the identity verification information comprises receiving biographical information through a user interface of the ATM.

4. The method of claim 1, claim 2 or claim 3, wherein receiving the identity verification information comprises receiving data captured by a sensor of the ATM.

5. The method of claim 4, wherein the data captured by the sensor of the ATM comprises audio information captured by an audio sensor of the ATM, video information captured by a video sensor of the ATM, image information captured by an image sensor of the ATM, data received by a transceiver of the ATM from a user device in communication with the ATM, or a combination thereof.

6. The method of claim 1 or of any of claims 2 to 5, wherein the providing at least the portion of the identity verification information to the sender device comprises causing the sender device to display biographical information of the receiver, display a message from the receiver, display an image of the user captured at the ATM, display audio of the user captured at the ATM, display video of the user captured at the ATM, or a combination thereof.

7. The method of claim 1 or of any of claims 2 to 6, further comprising:
requesting, by the at least one processor, confirmation from the receiver, the requesting including sending a message to a receiver device associated with the receiver; and
receiving, by the at least one processor, the confirmation from the receiver through a user interface of the ATM;
wherein the causing the cash to be dispensed by the ATM is in response both to receiving the authorization and receiving the confirmation.

8. The method of claim 1 or of any of claims 2 to 7, further comprising sending, by the at least one processor, a confirmation message to the sender device associated with the sender in response to the causing.

9. A server device comprising:
at least one transceiver;
the at least one processor in communication with the at least one transceiver; and
a non-transitory memory in communication with the at least one processor, the memory configured to store instructions that, when executed by the at least one processor, cause the processor to perform the method of any of claims 1-8.

10. An ATM comprising:
at least one transceiver;
a cash dispenser;
a user interface;
a processor in communication with the transceiver, the cash dispenser, and the user interface; and
a non-transitory memory in communication with the processor, the memory configured to store instructions that, when executed by the processor, cause the processor to perform processing including:
receiving a request for cash to be dispensed from the user interface, the request identifying a recipient of the cash and a sender of the cash;
receiving identity verification information for the recipient;
sending an authorization request to the server device of claim 9 by the transceiver, the authorization request identifying the recipient of the cash and the sender of the cash and including the identity verification information;
receiving authorization from the server by the transceiver; and
dispensing the cash by the cash dispenser in response to receiving the authorization.

11. The ATM of claim 10, wherein at least a portion of the identity verification information is received from the user interface.

12. The ATM of claim 10 or claim 11, further comprising at least one sensor, wherein at least a portion of the identity verification information is received from the at least one sensor.

13. The ATM of claim 12, wherein the at least one sensor comprises an audio sensor, a video sensor, an image sensor, or a combination thereof.

14. The ATM of claim 10 or of any of claims 11 to 13, wherein at least a portion of the identity verification information is received from a user device by the at least one transceiver.

15. The ATM of claim 10 or of any of claims 11 to 14, wherein the instructions further cause the processor to perform processing including
receiving a confirmation from the receiver from the user interface; and
sending the confirmation to the server by the transceiver prior to receiving the authorization.
